# EUROPÄISCHE PATENTSCHRIFT

(11) **EP 2 371 599 B1**
(45) Veröffentlichungstag und Bekanntmachung des Hinweises auf die Patenterteilung: **28.09.2016**
(21) Anmeldenummer: 11002200.1
(22) Anmeldetag: 17.03.2011
(51) Int. Cl.: B60K 1/04, B62D 25/20, H01M 2/10

(54) **Trägerstruktur zur Befestigung eines Energiespeichermoduls, insbesondere eines Batteriemoduls in einem Kraftfahrzeug**
Support structure for fixing an energy storage module, in particular a battery module in a motor vehicle
Structure porteuse pour la fixation d'un module de stockage d'énergie, notamment un module de batterie dans un véhicule automobile

(30) Priorität: 18.03.2010 DE 102010011890
(43) Veröffentlichungstag der Anmeldung: 05.10.2011
(73) Patentinhaber: Audi AG, 85045 Ingolstadt (DE)
(72) Erfinder: Decker, Dennis, 70499 Stuttgart (DE); Lehr, Andreas, 74072 Heilbronn (DE)

(56) Entgegenhaltungen:
- EP-A1- 2 070 754
- US-A1- 2007 007 060
- US-A1- 2009 179 461
- US-A1- 2009 236 162

## Beschreibung

Die Erfindung betrifft eine Trägerstruktur zur Befestigung eines Energiespeichermoduls, insbesondere eines Batteriemoduls in einem Kraftfahrzeug gemäß Oberbegriff des Patentanspruchs 1.

In der Automobilindustrie geht der Trend zunehmend zu Hybrid- und Elektrofahrzeugen, die neben den üblichen Starterbatterien sogenannte Traktionsbatterien mit sich führen, mit denen Elektromotoren als Fahrmotoren elektrisch mit Energie versorgt werden.

Im Hinblick auf die Fahrzeugsicherheit bei Unfällen (wie Frontalaufprall, Seitencrash) muss die Batterie so in das Fahrzeug integriert werden, dass die Batterie weder für die Insassen noch für die Umgebung eine Gefährdung darstellt. Dies gilt insbesondere für die Traktionsbatterien, die mit größerem Energieinhalt auch einen größeren Raumbedarf erfordern und aufgrund des höheren Gewichts solcher Batterien zudem erhöhte Anforderungen an das Batteriegehäuse, insbesondere hinsichtlich der Crashsicherheit gestellt werden.

Als Traktionsbatterien kommen unterschiedliche Technologien in Anwendung. Neben den üblichen Bleiakkumulatoren werden zunehmend auch Nickel-Cadmium-, Nickel-Metallhydrid- und Lithium-Ionen-Akkus eingesetzt. Hierbei werden immer mehrere Zellen zu einem Verbund zusammengefasst und im Folgenden werden daher solche Zellenverbunde als Batteriemodule bezeichnet.

Eine gattungsbildende Befestigungsstruktur für eine Batterieeinheit eines Elektrofahrzeugs ist aus der EP 2 070 754 A1 und der US 2009/236162 A1 bekannt. Der wesentlichste Teil dieser Batterieeinheit stellt eine zwischen zwei Längsträgern angeordnete einschalige Wanne mit umlaufenden Seitenwänden dar, auf die ein haubenförmiges Batteriegehäuse aufgesetzt und mit diesen Seitenwänden über Schraubverbindungen verbunden wird. Ferner weist die Batterieeinheit seitlich an den Seitenwänden der Wanne angeordnete Befestigungsabschnitte auf, die Querträger zugeordnet sind und mit Längsträgern verschraubt werden. Die Verbindung der Querträger erfolgt durch separate Schraubverbindungen mit den Längsträgern, wobei diese separaten Schraubverbindungen in Querrichtung paarweise mit jeweils zwei das wannenförmige Batteriegehäuse mit der Wanne verbindenden Schraubverbindungen fluchten.

Aus dem Stand der Technik gemäß der JP 10138956 A ist eine Karosseriebodenstruktur für ein Elektrofahrzeug bekannt, bei dem ein Bodenblech zusammen mit einem U-förmigen Tunnelteil einstückig ausgeformt ist und dieses Bodenteil jeweils am äußeren Rand an einen Längsträger angebunden ist. Unterhalb dieses Bodenteils befindet sich eine Batterietrageplatte, auf der Batteriemodule angeordnet sind, die gegenüber dem Tunnelteil mit einer weiteren Montageplatte abgedeckt sind, so dass darauf ein weiteres Batteriemodul so montiert werden kann, dass es von dem Tunnelteil umschlossen wird.

Ferner ist aus der DE 102 61 630 A1 ein Batterie-Trägermodul bekannt, bei welchem Batteriemodule von einer einschaligen Wanne aufgenommen werden, die gleichzeitig als Bodenverkleidung dient. Diese Wanne wird von einem Trägerverbund aufgenommen, der als Versteifung und im Falle einer Kollision als Mittel zur Übertragung von Kollisionskräften dient. Dieser Trägerverbund besteht aus zwei Längsträgern sowie diese verbindende Querträger.

Aus der US 2007/0007060 A1 ist ein Brennstoffzellen-Fahrzeug bekannt, bei dem ein Brennstoffzellenstack zwischen zwei Längsträgern und zwei Querträgern angeordnet wird, wobei die Querträger zusammen mit den Längsträgern eine rechteckförmige Fläche bilden, in der dieser Brennstoffzellenstack mittels Klammern fixiert und gehalten wird. Dieser Brennstoffzellen-stack wird also ausschließlich über diese Klammern mit der Karosseriestruktur des Fahrzeugs verbunden, die ihrerseits an ein mit den Querträgern verschraubtes Trägerteil angeformt sind und diese Querträger an dem Brennstoffzellenstack stirnseitig vorbeigeführt werden.

Schließlich sei der Vollständigkeit halber auf die US 2009/179461 A1 verwiesen, die eine Bodenschale aus einem Verbundwerkstoff für ein Fahrzeug beschreibt, die mit anderen Strukturelementen des Fahrzeugs verbunden sind. Die auf die Strukturelemente einwirkenden Kräfte werden in diese Bodenschale eingeleitet.

Aufgabe der Erfindung ist es, eine Trägerstruktur zur Integration eines Batteriemoduls in ein Fahrzeug anzugeben, mit der eine optimale Einleitung von Reaktionskräften des Batteriemoduls, insbesondere im Fall einer Kollision erzielt wird, jedoch nicht zu einer wesentlichen Erhöhung der Montagekosten und des Fahrzeuggewichts führt.

Diese Aufgabe wird gelöst durch eine Trägerstruktur mit den Merkmalen des Patentanspruchs 1.

Bei einer solchen Trägerstruktur zur Befestigung eines Energiespeichermoduls in einem Kraftfahrzeug, bei dem - das Energiespeichermodul auf einer Trägerplatte angeordnet ist,
- die Trägerplatte zwischen zwei Längsträgern über randseitige erste Montagepunkte mit den Längsträgern des Kraftfahrzeugs verbunden ist,
- das Energiespeichermodul über in Längsrichtung verlaufende zweite Montagepunkte mit der Trägerplatte verbunden ist,
- die zweiten Montagepunkte paarweise in Querrichtung mit den auf den gegenüberliegenden Längsseiten der Trägerplatte zwei ersten Montagepunkten fluchtend angeordnet sind, und
- wenigstens ein Querversteifungselement vorgesehen ist, das quer fluchtende erste Montagepunkte miteinander verbindet,
   ist erfindungsgemäß vorgesehen, dass
- wenigstens ein Verbindungsmittel vorgesehen ist, mit dem das Energiespeichermodul mit der Trägerplatte in den zweiten Montagepunkten unter Bildung eines Kraftschlusses mit dem Querversteifungselement verbunden wird.

Die erfindungsgemäße Trägerstruktur zeichnet sich dadurch aus, dass sowohl die ersten als auch die zweiten Montagepunkte in Querrichtung des Fahrzeugs fluchten, so dass die Reaktionskräfte des Batteriemoduls über dessen zweiten Montagepunkte in das Querversteifungselement eingeleitet und von dort über die steife Anbindung an die Längsträger von der Karosserie aufgenommen werden. Damit werden im Fahrbetrieb in allen Fahrsituationen die Reaktionskräfte des Energiespeichermoduls von der Trägerplatte mit nur geringer elastischer Verformung in die Fahrzeugkarosserie weitergeleitet.

Ferner zeichnet sich die erfindungsgemäße Lösung besonders dadurch aus, dass die zweiten Montagepunkte neben der Verbindungfunktion auch die Funktion der Krafteinleitung der Reaktionskräfte des Energiespeichermoduls in das Querversteifungselement übernehmen.

Bei einer vorteilhaften Weiterbildung der Erfindung ist das Querversteifungselement trägerplattenseitig mit einem halboffenen, insbesondere U-förmigen Profil ausgebildet, wobei das Verbindungsmittel zur Verbindung des Energiespeichermoduls mit der Trägerplatte einen Kopf aufweist, dessen Kopfform an das Innenprofil des Querversteifungselements für eine im Wesentlichen flächenbündige Verbindung zwischen dem Kopf und dem Querversteifungselement angepasst ist.

Die Ausbildung als halboffenes Hohlprofil führt einerseits zu einer hohen Biegebelastung des Querversteifungselementes und andererseits zusammen mit der Trägerplatte zu einem geschlossenen Profil, so dass der dadurch entstehende Hohlraum von dem Kopf des für die Montage des Batteriemoduls auf der Trägerplatte vorgesehenen Verbindungsmittels flächenbündig ausgefüllt und dadurch gleichzeitig die kraftschlüssige Verbindung zu dem Querversteifungselement sichergestellt wird. Vorzugsweise ergibt sich eine formschlüssige Verbindung zwischen dem Kopf des Verbindungsmittels und dem Querversteifungselement, wenn der Kopf mit dem Querversteifungselement verklebt wird.

Besonders vorteilhaft ist es, als Verbindungsmittel für die Verbindung des Energiespeichermoduls mit der Trägerplatte eine Gewindebuchse mit einem Innengewinde, insbesondere mit einem Gewindeeinsatz und einem Kopf zu verwenden. Mit dem Außengewinde kann die Gewindebuchse in die Trägerplatte eingeschraubt werden, wobei eine Gewindeeinsatz für eine Schraubverbindung mit dem Energiespeichermodul im Falle einer Reparatur aus der Gewindebuchse geschraubt werden kann.

Gemäß einer weiteren vorteilhaften Ausgestaltung der Erfindung sind die beiden Längsträger über einen Mitteltunnel des Kraftfahrzeug zu Aufnahme des Energiespeichermoduls verbunden. Damit wird der Mitteltunnel des Kraftfahrzeug von der Trägerplatte geschlossen, wodurch sich die Torsionssteifigkeit des Tunnels wesentlich erhöht.

Ein gegenüber der Umwelt dichter, insbesondere wasserdichter Batterieraum wird gemäß einer Weiterbildung der Erfindung in einfacher und kostengünstiger Weise dadurch erreicht, dass zwischen dem Längsträger und der Trägerplatte ein Dichtmittel angeordnet ist.

Die gemäß einer weiteren vorteilhaften Ausgestaltung der Erfindung vorgesehene Verwendung des Werkstoffes CFK sowohl für die Trägerplatte als auch das Querversteifungselement bietet die Möglichkeit, durch einen gezielten Lagenaufbau und gezielt gerichtete Fasern die Bauteileigenschaften auf die jeweilige Belastung optimal auszulegen.

So wird die Trägerplatte aus einem CFK-Werkstoff mit bidirektionalen CFK-Fasern hergestellt, wobei die Fasern in +450/-450-Richtung hinsichtlich der Längsrichtung verlaufen. Dagegen wird das Querversteifungselement aus einem CFK-Werkstoff mit unidirektional ausgebildeten CFK-Fasern hergestellt.

Schließlich wird bei einer letzten vorteilhaften Weiterbildung der Erfindung das Querversteifungselement zur Bildung eines geschlossenen Profils über Flanschflächen mit der Trägerplatte, vorzugsweise mittels einer Klebeverbindung verbunden.

Die Erfindung wird nachfolgend anhand eines Ausführungsbeispiels unter Bezugnahme auf die beigefügten Figuren ausführlich beschrieben. Es zeigen:
- Figur 1: ein schematische Schnittdarstellung in Querrichtung eines Ausführungsbeispiels einer erfindungsgemäßen Trägerstruktur im Bereich eines Batteriemodule aufnehmenden Mitteltunnels des Kraftfahrzeugs,
- Figur 2: eine Draufsicht auf eine Trägerplatte der erfindungsgemäßen Trägerstruktur gemäß Figur 1,
- Figur 3: eine Sicht von unten auf eine Trägerplatte der erfindungsgemäßen Trägerstruktur gemäß Figur 1, und
- Figur 4: eine schematische Schnittdarstellung in Längsrichtung der erfindungsgemäßen Trägerstruktur gemäß Figur 1.

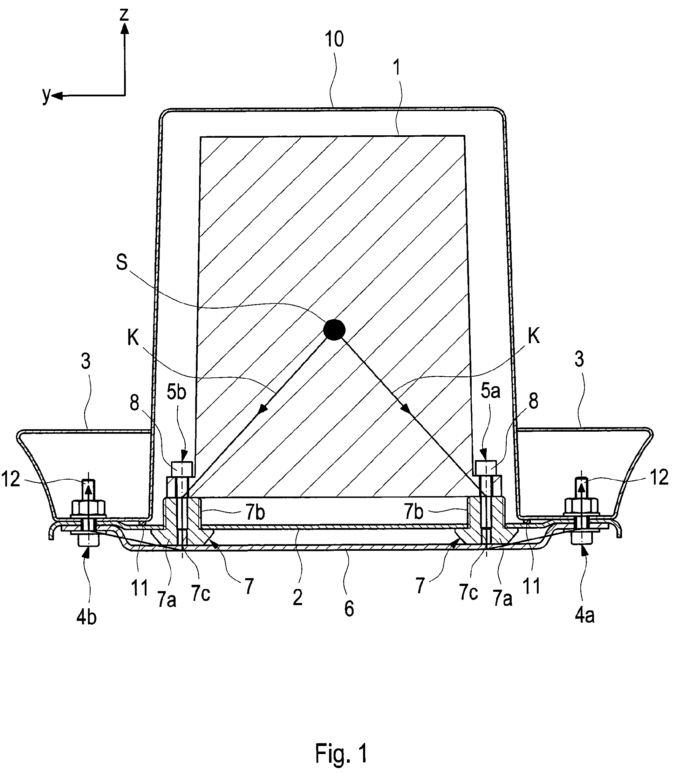

Die Querschnittsebene der Darstellung nach Figur 1 liegt in der z-y-Richtung und liegt im Bereich eines ein Batteriemodul 1 aufnehmenden Mitteltunnels 10 eines Kraftfahrzeugs.

Der Mitteltunnel 10 geht beidseitig des Batteriemoduls 1 jeweils in einen Längsträger 3 über, wobei die beiden Längsträger 3 über eine das Batteriemodul 1 tragende Trägerplatte 2 in ersten Montagepunkten 4a bzw. 4b verbunden werden. In diesen Montagepunkten 4a und 4b wird mittels Schraubverbindungsmittel 12, bspw. bestehend aus einer Schraube mit Mutter die Trägerplatte 2 mit den Längsträgern 3 kraftschlüssig verschraubt.

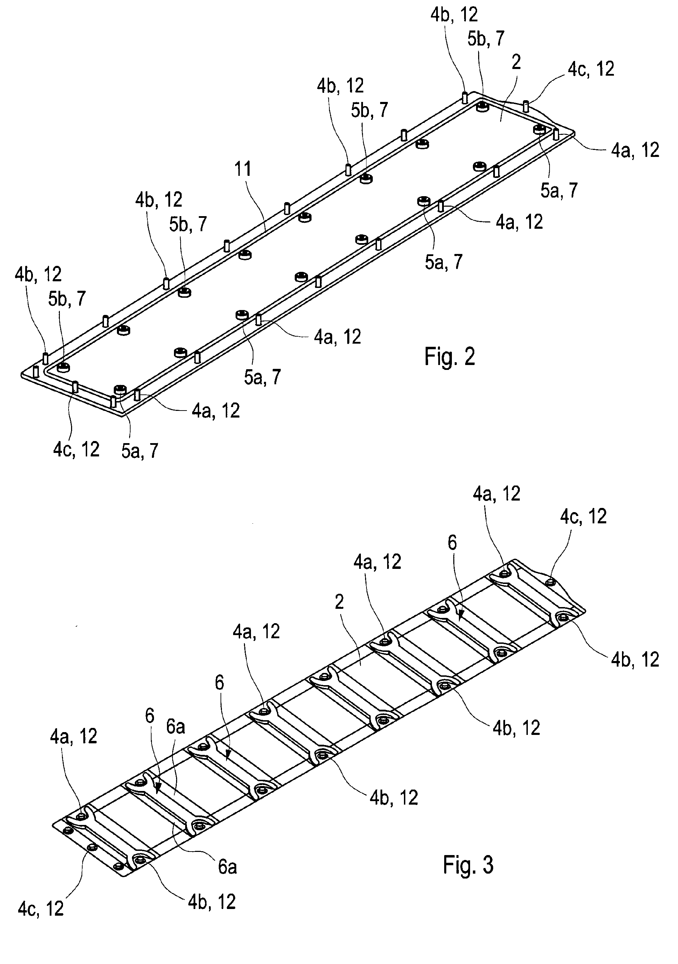

Wie aus der Draufsicht gemäß Figur 2 ersichtlich ist, sind die Montagepunkte 4a bzw. 4b auf den gegenüberliegenden Längsseiten der Trägerplatte 2 randseitig in äquidistanten Abständen angeordnet. Zusätzlich sind auf der Stirnseite der Trägerplatte 2 jeweils weitere Montagepunkte 4c angeordnet, die mit Stirnseiten des Mitteltunnels 10 zur Bildung eines abgeschlossenen Batterieraumes verbunden werden, bspw. ebenfalls mit Schraubverbindungsmittel. In dieser Draufsicht sind auch die in den Montagepunkten 4a, 4b, 5a und 5b eingesetzten Verbindungsmittel dargestellt, also in den Montagepunkten 4a und 4b die Schraubverbindungsmittel 12 (nur die Schraube) und in den Montagepunkten 5a und 5b die im Folgenden erläuterten Gewindebuchsen 7.

Gemäß Figur 1 ist das Batteriemodul 1 über zweite Montagepunkte 5a und 5b mittels Gewindebuchsen als Verbindungsmittel 7 mit der Trägerplatte 2 verbunden. Wie in Figur 2 dargestellt, sind die ersten und zweiten Montagepunkte 4a, 4b, 5a und 5b in Querrichtung (y-Richtung) in einer Linie fluchtend angeordnet. Auf dieser Linie verbindet ein Querversteifungselement 6 die beiden ersten Montagepunkte 4a und 4b mit den Längsträgern 3. Die Schraubverbindungsmittel 12 verbinden daher gleichzeitig die Trägerplatte 2 als auch das Querversteifungselement 6 mit den Längsträgern 3.

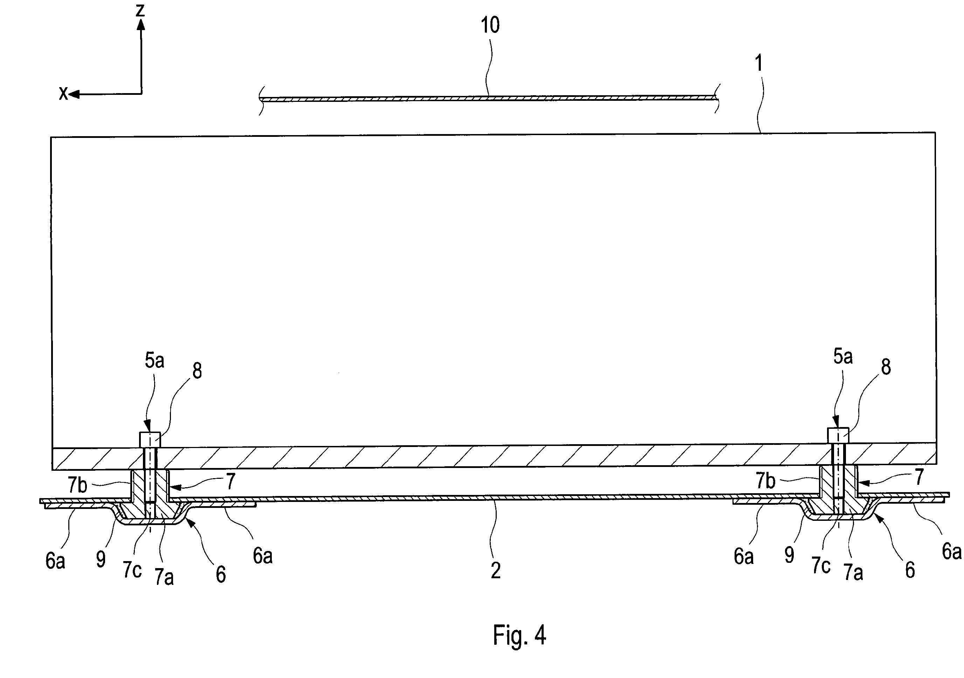

In der Schnittdarstellung der x-z-Ebene gemäß Figur 4 weist das Querversteifungselement 6 ein U-förmiges Profil auf, das über Flanschflächen 6a mit der Unterseite der Trägerplatte 2 verbunden ist, bspw. mittels einer Klebeverbindung.

Die Gewindebuchse 7 ist mit einem Gewindeeinsatz 7c zur Verschraubung mit einer Verbindungsschraube 8, einem Kopf 7a sowie einem Außengewinde 7b ausgebildet, wobei über das Außengewinde 7b die Gewindebuchse 7 derart von unten durch die Trägerplatte 2 eingeschraubt wird, dass der Kopf 7b dieser Gewindebuchse 7 auf der Unterseite der Trägerplatte aufliegt. Der Gewindeeinsatz lässt sich im Falle einer Reparatur aus der Gewindebuchse 7 entfernen. Der Kopf 7a der Gewindebuchse 7 ist so geformt, dass er - wie aus Figur 4 ersichtlich - an die Innenform des U-förmigen Profils des Querversteifungselementes 6 angepasst ist und dadurch kraftschlüssig auf der Innenfläche des Querversteifungselementes 6 aufliegt. Der Kraftschluss wird noch verbessert, wenn mittels einer Klebeverbindung 9 ein Formschluss zwischen dem Kopf 7a und dem Querversteifungselement 6 hergestellt wird, da dies durch die großen Klebeflächen eine sehr steife Einbettung in die Trägerplatte 2 bewirkt und insbesondere durch Formschluss mit den die U-Form bildenden Querprofilseitenwänden eine zusätzliche Verdrehsicherung darstellt.

Aufgrund des Kraftschlusses der Gewindebuchsen 7 mit dem Querversteifungselement 6 werden die mit Kraftpfeilen K in Figur 1 dargestellten Reaktionskräfte, ausgehend von einem Schwerpunkt S des Batteriemoduls 1 über die zweiten Montagepunkte 5a und 5b in den Querversteifungsträger 6 eingeleitet, der diese an den ersten Montagepunkte 4a und 4b über die feste Schraubverbindung 12 in die Längsträger 3 und damit in die Fahrzeugkarosserie ableiten.

Die Anzahl der verwendeten Querversteifungselemente 6 bestimmt sich nach der Anzahl der längsseitig vorgesehenen zweiten Montagpunkte 5a bzw. 5b. Da diese Querversteifungselemente 6 die Reaktionskräfte des Batteriemoduls 1 aufnehmen, werden sie hauptsächlich auf Biegung beansprucht, wogegen die Trägerplatte 2 hauptsächlich durch Schubkräfte beansprucht wird.

Zur Optimierung der Trägerplatte 2 und des Querversteifungselementes 6 hinsichtlich deren Beanspruchung wird zu deren Herstellung als Werkstoff CFK (kohlenstofffaserverstärkter Kunststoff) verwendet, der die Möglichkeit bietet, durch gezielten Lagenaufbau und gezielt gerichtete Fasern die Bauteileigenschaften auf eine bestimmte Belastung optimal auszulegen. So besteht die Trägerplatte 2 hauptsächlich aus bidirektionalen CFK-Fasern in +45°/-45°-Ausrichtung bezüglich der Längsrichtung (x-Richtung). Die Querversteifungselemente 6 werden aus unidirektionalen Fasern in 0°-Ausrichtung hergestellt. Damit ist auch eine einfache Verklebung des Querversteifungselementes 6 mit der Trägerplatte 2 realisierbar.

Der Batterieinnenraum, also der von der Trägerplatte 2 und dem Tunnel 10 gebildete Raum wird wasserdicht gegenüber dem Fahrzeugaußenraum dadurch abgedichtet, dass zwischen der Trägerplatte 2 und den Längsträgern 3 eine auf der Trägerplatte 2 umlaufende Dichtung 11, bspw. ausgeführt als Schaumdichtung vorgesehen ist (vgl. Figuren 1 und 2). Zusammen mit der Verklebung des Kopfes 7a der Gewindebuchse 7 in dem Hohlprofil des Querversteifungselementes 6 ergibt sich eine vollständige Abdichtung des Batterieraums. Ein solcher mit der Trägerplatte 2 verschlossener Mitteltunnel 10 weist eine höhere Torsionssteifigkeit gegenüber üblichen Tunnelkonstruktionen auf.

### Bezugszeichen

- 1: Energiespeichermodul
- 2: Trägerplatte
- 3: Längsträger
- 4a: erste Montagepunkte
- 4b: erste Montagepunkte
- 4c: weitere Montagepunkte
- 5a: zweite Montagepunkte
- 5b: zweite Montagepunkte
- 6: Querversteifungselement
- 7: Verbindungsmittel, Gewindebuchse 7
- 7a: Kopf des Verbindungsmittels
- 7b: Außengewinde der Gewindebuchse 7
- 7c: Innengewinde in der Gewindebuchse 7
- 8: Verbindungsschraube
- 9: Klebeverbindung

- 10: Mitteltunnel
- 11: Dichtmittel
- 12: Schraubverbindungsmittel

## Patentansprüche

1. Trägerstruktur zur Befestigung eines Energiespeichermoduls (1) in einem Kraftfahrzeug, mit einem Energiespeichermodul (1) und einer Trägerplatte (2), wobei
- das Energiespeichermodul (1) auf der Trägerplatte (2) angeordnet ist,
- die Trägerplatte (2) zwischen zwei Längsträgern (3) über randseitige erste Montagepunkte (4a, 4b) mit den Längsträgern (3) des Kraftfahrzeugs verbunden ist,
- das Energiespeichermodul (1) über in Längsrichtung verlaufende zweite Montagepunkte (5a, 5b) mit der Trägerplatte (2) verbunden ist,
- die zweiten Montagepunkte (, 5a, 5b) paarweise in Querrichtung (y-Richtung) mit den auf den gegenüberliegenden Längsseiten der Trägerplatte (2) zwei ersten Montagepunkten (4a, 4b) fluchtend angeordnet sind, und
- wenigstens ein Querversteifungselement (6) vorgesehen ist, das quer fluchtende erste Montagepunkte (4a, 4b) miteinander verbindet, **dadurch gekennzeichnet, dass**
- wenigstens ein Verbindungsmittel (7) vorgesehen ist, mit dem das Energiespeichermodul (1) mit der Trägerplatte (2) in den zweiten Montagepunkten (5a, 5b) unter Bildung eines Kraftschlusses mit dem Querversteifungselement (6) verbunden wird.

2. Trägerstruktur nach Anspruch 1,
**dadurch gekennzeichnet, dass**
- das Querversteifungselement (6) mit einem trägerplattenseitigen, halboffenen, insbesondere U-förmigen Profil ausgebildet ist, und
- das Verbindungsmittel (7) einen Kopf (7a) aufweist, dessen Kopfform an das Innenprofil des Querversteifungselements (6) für eine im Wesentlichen flächenbündige Verbindung zwischen dem Kopf (7a) und dem Querversteifungselement (6) angepasst ist.

3. Trägerstruktur nach Anspruch 2,
**dadurch gekennzeichnet, dass** der Kopf (7a) des Verbindungsmittels (7) mit dem Querversteifungselement (6) formschlüssig, vorzugsweise mittels einer Klebeverbindung (9) verbunden wird.

4. Trägerstruktur nach Anspruch 2 oder 3,
**dadurch gekennzeichnet, dass** das Verbindungsmittel (7) als Gewindebuchse mit Innengewinde (7c), insbesondere einem Gewindeeinsatz und Kopf (7a) ausgebildet ist.

5. Trägerstruktur nach einem der Ansprüche 2 bis 4,
**dadurch gekennzeichnet, dass** das Verbindungsmittel (7) ein Außengewinde (7b) aufweist.

6. Trägerstruktur nach einem der vorhergehenden Ansprüche,
**dadurch gekennzeichnet, dass** die beiden Längsträger (3) über einen Mitteltunnel (10) des Kraftfahrzeug zu Aufnahme des Energiespeichermoduls (1) verbunden sind.

7. Trägerstruktur nach einem der vorhergehenden Ansprüche,
**dadurch gekennzeichnet, dass** zwischen dem Längsträger (3) und der Trägerplatte (2) ein Dichtmittel (11) angeordnet ist.

8. Trägerstruktur nach einem der vorhergehenden Ansprüche,
**dadurch gekennzeichnet, dass** die Trägerplatte (2) aus einem CFK-Werkstoff mit bidirektionalen CFK-Fasern ausgebildet ist, die in +45°/-45°-Richtung hinsichtlich der Längsrichtung (x-Richtung) verlaufen.

9. Trägerstruktur nach einem der vorhergehenden Ansprüche,
**dadurch gekennzeichnet, dass** das Querversteifungselement (6) aus einem CFK-Werkstoff mit unidirektional ausgebildeten CFK-Fasern ausgebildet ist.

10. Trägerstruktur nach einem der vorhergehenden Ansprüche,
**dadurch gekennzeichnet, dass** das Querversteifungselement (6) zur Bildung eines geschlossenen Profils über Flanschflächen (6a) mit der Trägerplatte (2), vorzugsweise mittels einer Klebeverbindung verbunden wird.

## Claims

1. Carrier structure for fastening an energy storage module (1) in a motor vehicle, having an energy storage module (1) and a carrier plate (2), wherein
- the energy storage module (1) is arranged on the carrier plate (2),
- the carrier plate (2) between two side members (3) is connected to the side members (3) of the motor vehicle via edge-side first assembly points (4a, 4b),
- the energy storage module (1) is connected to the carrier plate (2) via second assembly points (5a, 5b) running in the longitudinal direction,
- the second assembly points (5a, 5b) are arranged to be aligned with the two first assembly points (4a, 4b) on the opposite longitudinal sides of the carrier plate (2) in pairs in the transverse direction (y direction), and
- at least one transverse bracing element (6) is provided which connects the transversely aligned first assembly points (4a, 4b) to each other,
**characterised in that**
- at least one connection means (7) is provided with which the energy storage module (1) is connected to the carrier plate (2) in the second assembly points (5a, 5b), forming a frictional bond with the transverse bracing element (6).

2. Carrier structure according to claim 1,
**characterised in that**
- the transverse bracing element (6) is formed having a carrier plate-side, half-open, in particular U-shaped profile, and
- the connection means (7) has a head (7a), the head shape of which is adapted to the inner profile of the transverse bracing element (6) for a substantially flush connection between the head (7a) and the transverse bracing element (6).

3. Carrier structure according to claim 2,
**characterised in that** the head (7a) of the connection means (7) is positively connected to the transverse bracing element (6), preferably by means of an adhesive bond (9).

4. Carrier structure according to claim 2 or 3,
**characterised in that** the connection means (7) is formed as a threaded bush having an inner thread (7c), in particular a thread insert and head (7a).

5. Carrier structure according to one of claims 2 to 4,
**characterised in that** the connection means (7) has an outer thread (7b).

6. Carrier structure according to one of the preceding claims,
**characterised in that** the two side members (3) are connected via a central tunnel (10) of the motor vehicle for receiving the energy storage module (1).

7. Carrier structure according to one of the preceding claims,
**characterised in that** a sealant (11) is arranged between the side member (3) and the carrier plate (2).

8. Carrier structure according to one of the preceding claims,
**characterised in that** the carrier plate (2) is formed from a CFC material having bidirectional CFC fibres which run in the +45°/-45° direction with regard to the longitudinal direction (x direction).

9. Carrier structure according to one of the preceding claims,
**characterised in that** the transverse bracing element (6) is formed from a CFC material having CFC fibres formed to be unidirectional.

10. Carrier structure according to one of the preceding claims,
**characterised in that** the transverse bracing element (6) is connected to the carrier plate (2) via flange surfaces (6a) for the formation of a closed profile, preferably by means of an adhesive bond.

## Revendications

1. Structure porteuse pour la fixation d'un module accumulateur d'énergie (1) dans un véhicule automobile, avec un module accumulateur d'énergie (1) et avec une plaque porteuse (2),
- le module accumulateur d'énergie (1) étant agencé sur la plaque porteuse (2),
- la plaque porteuse (2) entre deux longerons (3) étant reliée aux longerons (3) du véhicule automobile par l'intermédiaire de premiers points de montage (4a, 4b) situés du côté des bords,
- le module accumulateur d'énergie (1) étant relié à la plaque porteuse (2) par l'intermédiaire de deuxièmes points de montage (5a, 5b) s'étendant dans le sens de la longueur,
- les deuxièmes points de montage (5a, 5b) étant agencés par paires dans la direction transversale (direction y) de manière à être alignés avec les deux premiers points de montage (4a, 4b) sur les côtés longitudinaux opposés de la plaque porteuse (2), et
- au moins un élément de renfort transversal (6) étant prévu, lequel relie entre eux des premiers points de montage (4a, 4b) alignés transversalement,
**caractérisée en ce que**
- il est prévu au moins un moyen d'assemblage (7) avec lequel le module accumulateur d'énergie (1) avec la plaque porteuse (2) dans les deuxièmes points de montage (5a, 5b) est relié à l'élément de renfort transversal (6) en formant un assemblage par force.

2. Structure porteuse selon la revendication 1, **caractérisée en ce que**
- l'élément de renfort transversal (6) est conçu avec un profil, du côté de la plaque porteuse, qui est semi-ouvert, notamment en forme de U, et
- le moyen d'assemblage (7) comporte une tête (7a) dont la forme de tête est adaptée au profil intérieur de l'élément de renfort transversal (6) pour une liaison, sensiblement à fleur de surfaces, entre la tête (7a) et l'élément de renfort transversal (6).

3. Structure porteuse selon la revendication 2, **caractérisée en ce que** la tête (7a) du moyen d'assemblage (7) est reliée à l'élément de renfort transversal (6) par concordance de forme, de préférence au moyen d'un assemblage collé (9).

4. Structure porteuse selon la revendication 2 ou 3, **caractérisée en ce que** le moyen d'assemblage (7) est conçu comme une douille taraudée avec un filetage intérieur (7c), notamment avec un insert taraudé et une tête (7a).

5. Structure porteuse selon l'une des revendications 2 à 4, **caractérisée en ce que** le moyen d'assemblage (7) comporte un filetage extérieur (7b).

6. Structure porteuse selon l'une des revendications précédentes, **caractérisée en ce que** les deux longerons (3) sont reliés par l'intermédiaire d'un tunnel central (10) du véhicule automobile pour recevoir le module accumulateur d'énergie (1).

7. Structure porteuse selon l'une des revendications précédentes, **caractérisée en ce qu'**un moyen d'étanchéité (11) est agencé entre le longeron (3) et la plaque porteuse (2).

8. Structure porteuse selon l'une des revendications précédentes, **caractérisée en ce que** la plaque porteuse (2) est conçue en un matériau renforcé par des fibres de carbone avec des fibres de carbone bidirectionnelles qui s'étendent dans une direction de +45°/-45° par rapport à la direction longitudinale (direction x).

9. Structure porteuse selon l'une des revendications précédentes, **caractérisée en ce que** l'élément de renfort transversal (6) est conçu en un matériau renforcé par des fibres de carbone avec des fibres de carbone conçues unidirectionnelles.

10. Structure porteuse selon l'une des revendications précédentes, **caractérisée en ce que**, pour former un profil fermé, l'élément de renfort transversal (6) est relié par l'intermédiaire de surfaces de bride (6a) à la plaque porteuse (2), de préférence au moyen d'un assemblage collé.
